Europäisches Patentamt

European Patent Office

Office européen des brevets

(11) Numéro de publication: **0 233 351 B1**

# FASCICULE DE BREVET EUROPEEN

(45) Date de publication de fascicule du brevet:
**28.08.91**

(51) Int. Cl.⁵: **B23K 1/00, B21L 11/00**

(21) Numéro de dépôt: **86117421.7**

(22) Date de dépôt: **15.12.86**

(54) **Machine pour la soudure d'une chaîne ornementale à anneaux croisés du type en forme de corde à deux brins.**

(30) Priorité: **24.12.85 IT 8562685**

(43) Date de publication de la demande:
**26.08.87 Bulletin 87/35**

(45) Mention de la délivrance du brevet:
**28.08.91 Bulletin 91/35**

(84) Etats contractants désignés:
**CH DE ES FR GB IT LI**

(56) Documents cités:
**GB-A- 2 084 906**
**US-A- 4 012 618**

(73) Titulaire: **Grotto, Ferdinando**
**Via Monte Novegno, 39**
**I-36061 Bassano del Grappa Vicenza(IT)**

Titulaire: **Bassan, Franco**
**Via Giulietti, 35**
**I-36100 Vicenza(IT)**

Titulaire: **Campora, Giovanni**
**Via Gasparoni, 3**
**I-36100 Vicenza(IT)**

(72) Inventeur: **Grotto, Ferdinando**
**Via Monte Novegno, 39**
**I-36061 Bassano del Grappa Vicenza(IT)**
Inventeur: **Bassan, Franco**
**Via Giulietti, 35**
**I-36100 Vicenza(IT)**
Inventeur: **Campora, Giovanni**
**Via Gasparoni, 3**
**I-36100 Vicenza(IT)**

(74) Mandataire: **Bettello, Luigi, Dott. Ing.**
**Via Col d'Echele, 25**
**I-36100 Vicenza(IT)**

Rank Xerox (UK) Business Services

## Description

La présente invention a pour objet une machine destinée à réaliser des soudures simultanées sur deux mailles, respectivement droite et gauche, d'une chaîne ornementale du type en forme de corde à deux brins, étant observé que ladite machine permet simultanément la récupération des âmes filiformes, le plus souvent en laiton, qui assurent l'assemblage des anneaux ou mailles de la chaîne avant la soudure.

Une machine telle que décrite dans le preámbule de la revendication 1 est connue dans l'art antérieur.

De manière générale, dans la machine suivant l'invention la chaîne à travailler est déroulée d'une bobine de manière à passer d'abord entre deux tambours opposés qui mettent en place les mailles. Puis elle est saisie par un dispositif de pinçage qui assure sa mise en rotation suivant son axe propre et son avancement axial de la valeur d'un pas, les deux âmes ou fils en laiton assurant toujours l'assemblage des brins constitutifs. Les mailles ou anneaux de la chaîne sont alors soudés aux positions exactes désirées à l'aide de deux organes de soudage qui agissent en deux points différents de la chaîne, en correspondance avec les deux brins.

Les mouvements d'avance et de rotation de la chaîne et les opérations de soudure se poursuivant de manière alternée, ladite chaîne pénètre à l'intérieur d'un dispositif agencé de manière à ce que les âmes en fil métallique soient extraites. La chaîne ainsi libérée est recueillie sur une bobine réceptrice convenablement entraînée en rotation, en fonction du pas de déplacement de la chaîne.

En tout état de cause la machine suivant l'invention est définie à la revendication 1.

Le dessin annexé, donné à titre d'exemple permettra de mieux comprendre l'invention, les caractéristiques qu'elle présente et les avantages qu'elle est susceptible de procurer :

Fig. 1 est une vue de côté montrant de manière schématique l'agencement général d'une machine suivant l'invention.

Fig. 2, 3 et 4 représentent, respectivement en coupe verticale, en vue en élévation et en coupe horizontale, le premier poste de travail équipé des tambours de pression.

Fig. 5 est une coupe verticale du dispositif de pinçage qui assure l'avance et la mise en rotation de la chaîne à travailler.

Fig. 6 est la vue en plan correspondante.

Fig. 7 est une vue de côté représentant le poste d'assemblage par soudure.

Fig. 8 est la vue en élévation correspondante.

Fig. 9 est une vue de côté avec arrachements illustrant l'agencement du mécanisme qui assure l'élimination des âmes en laiton des deux brins de la chaîne.

Fig. 10 est la vue en plan par dessus de ce dispositif.

Fig. 11 est une vue par côté avec arrachements du dernier poste de travail de la machine, assurant l'enroulement de la chaîne à l'état fini sur une bobine tournante.

Fig. 12 en est la vue en élévation.

Fig. 13 montre à une échelle très agrandie une partie d'une chaîne à deux brins du genre de celles traitées par la machine suivant l'invention.

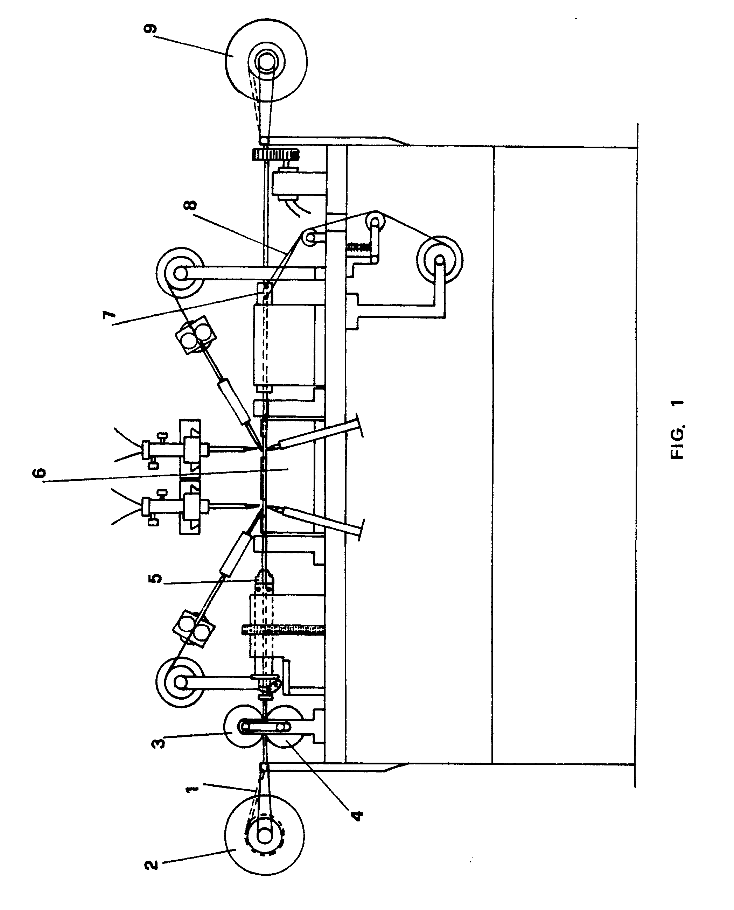

Dans la machine représentée en fig. 1, la chaîne 1 en forme de corde à deux brins est déroulée d'une bobine 2 pour passer ensuite entre deux tambours 3 et 4 qui mettent en place les mailles de ladite chaîne. Cette dernière pénètre alors à l'intérieur d'un dispositif de pinçage 5 qui, moyennant rotation et avance de la valeur d'un pas, assure le déplacement angulaire et axial de la chaîne, avant que celle-ci soit introduite dans le poste d'assemblage 6 qui assure l'opération de soudure de ses anneaux.

La chaîne 1 s'engage ensuite dans un conduit ménagé dans une pince 7 au niveau de laquelle sont extraits les deux fils de laiton 8 qui constituent les âmes de la chaîne et assurent l'assemblage ce celle-ci au cours du travail. La chaîne 1 est enfin recueillie à l'état fini sur une bobine 9.

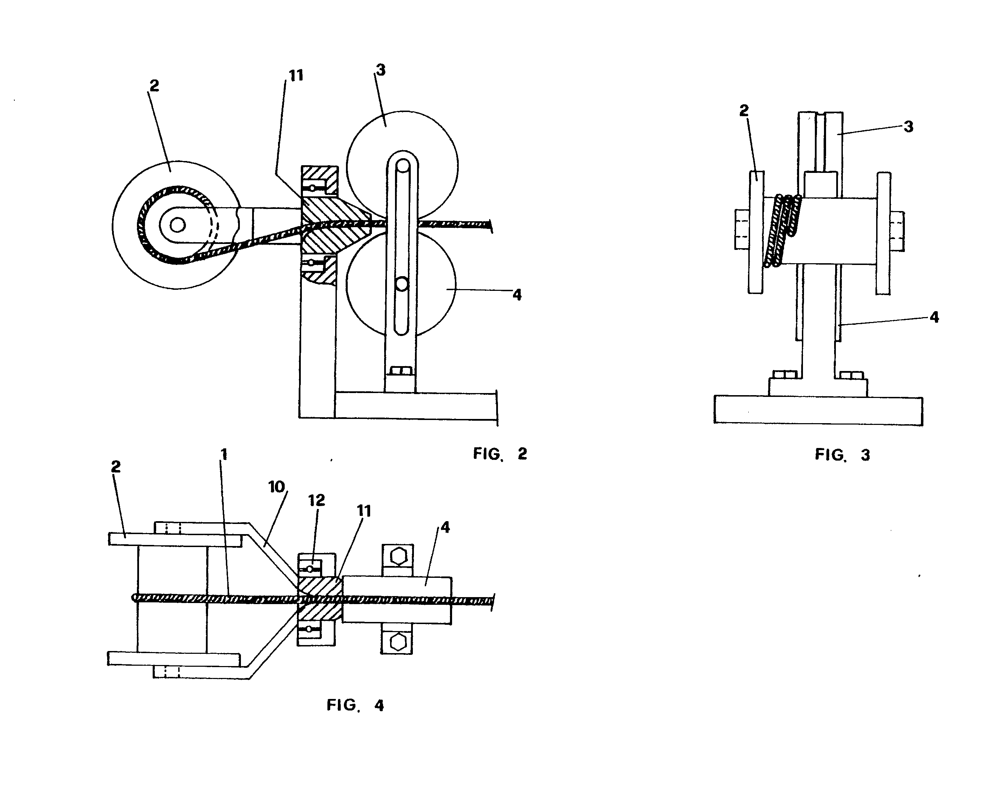

De manière plus précise et en se référant aux fig. 2, 3 et 4, on peut constater que la bobine ou dévidoir 2 à partir duquel est prélevée la chaîne 1 à travailler est monté, par l'intermédiaire d'une fourche 10, sur un mors annulaire 11 qui est lui-même monté tournant à l'intérieur d'un roulement 12, lequel permet la rotation dudit mors suivant son axe. A la sortie de ce mors 11, la chaîne passe entre les tambours 3 et 4 qui mettent en place les brins constitutifs en comprimant légèrement l'ensemble.

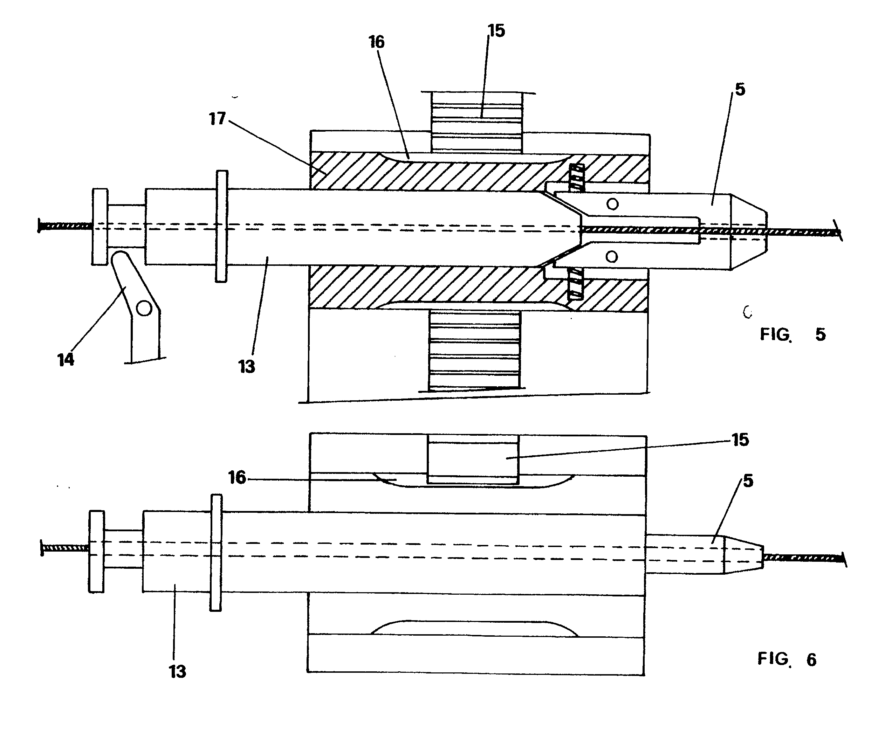

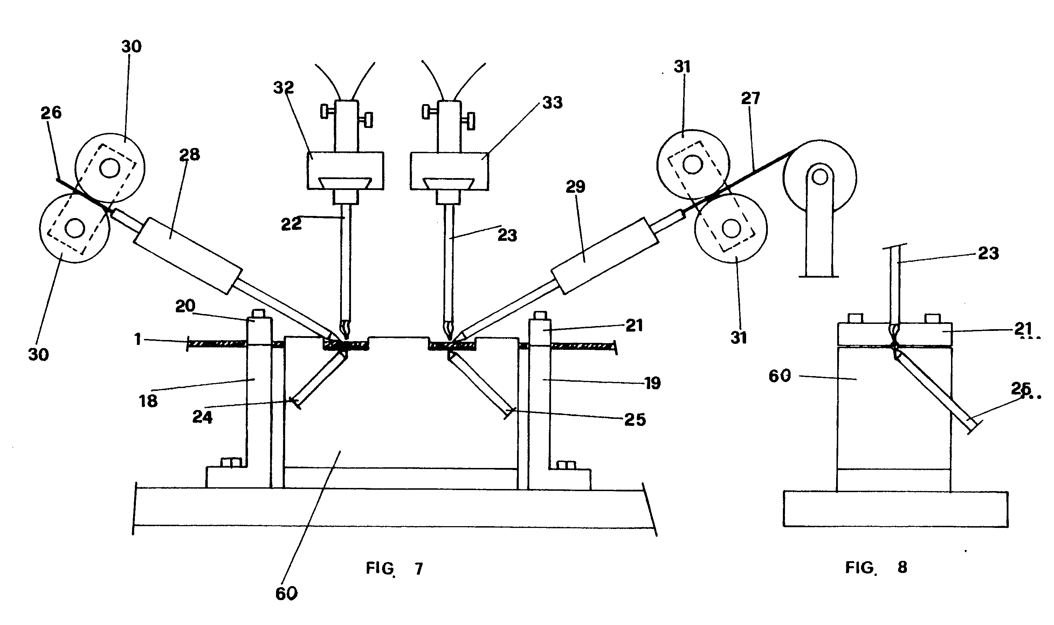

L'avance de la chaîne est assurée par le dispositif de pinçage 5 représenté aux fig. 5 et 6. En même temps qu'il se referme sur la chaîne au moment opportun, ce dispositif fait avancer celle-ci sous l'effet de poussée d'un petit piston creux 13 dont le mouvement longitudinal est commandé par un levier 14 ; le mouvement de rotation est donné par une crémaillère 15 qui coopère avec une denture 16 prévue sur le bâti tubulaire 17 du dispositif, bâti à l'intérieur duquel le piston 13 précité peut se déplacer axialement vers l'avant.

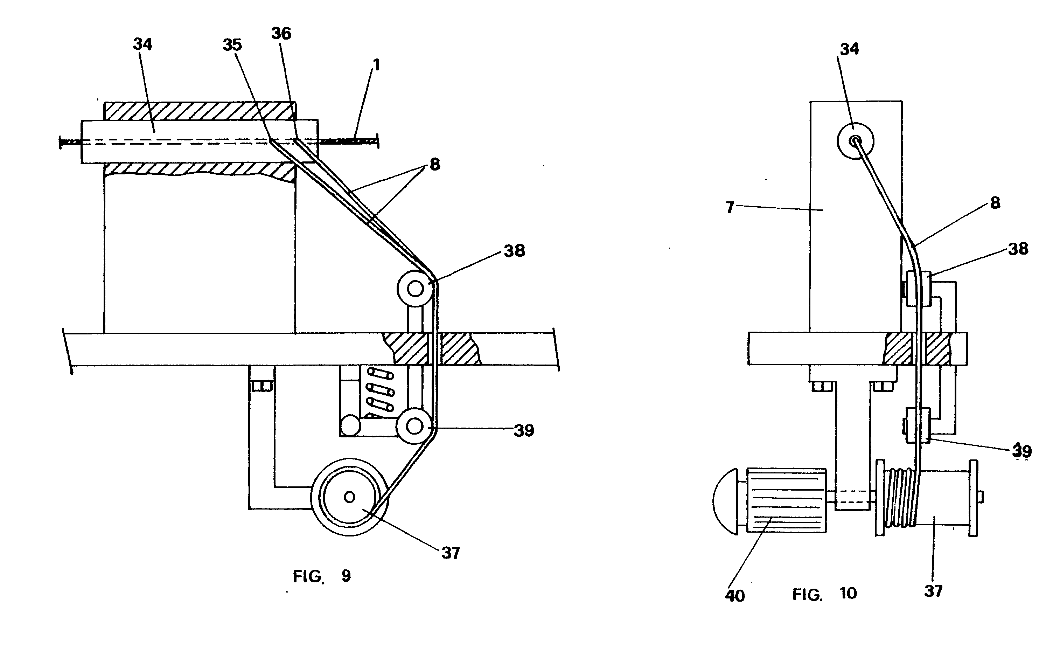

Au poste de soudage 6, représenté aux détail en fig. 7 et 8, la chaîne 1 avance entre deux supports 18 et 19 pourvus vers le haut de mâchoires 20, respectivement 21, qui sont mobiles verticalement de façon à pouvoir se soulever au cours du mouvement d'avance de ladite chaîne. Ces mâchoires s'abaissent au contraire lorsque la chaîne doit rester bloquée entre les deux supports 18 et 19.

La chaîne 1 traverse axialement un conduit tubulaire ménagé à l'intérieur d'un bâti auquel a été affectée la référence 60. Ce bâti est découpé d'ouvertures au niveau des points de soudure de façon à permettre l'action des organes de soudage 22 et 23 associés à des outils de centrage 24 et 25 qui assurent la mise en place des spires de la chaîne. Le métal d'apport nécessaire à la soudure est amené sous la forme de fils en alliage 26 et 27 qui sont guidés à travers des tubes appropriés 28, 29 et qui sont déplacés axialement par deux paires de tambours opposés, respectivement référencés 30 et 31.

Les organes de soudage 22 et 23 sont eux-mêmes mobiles axialement à l'intérieur de guides 32 et 33 de façon à pouvoir se présenter en position exacte pour la soudure au moment opportun. En fait les soudures sont effectuées simultanément sur deux spires déterminées de la chaîne, cette action intervenant de manière répétée au cours d'une rotation de celle-ci d'un tour de manière à stabiliser très exactement la position à la manière désirée.

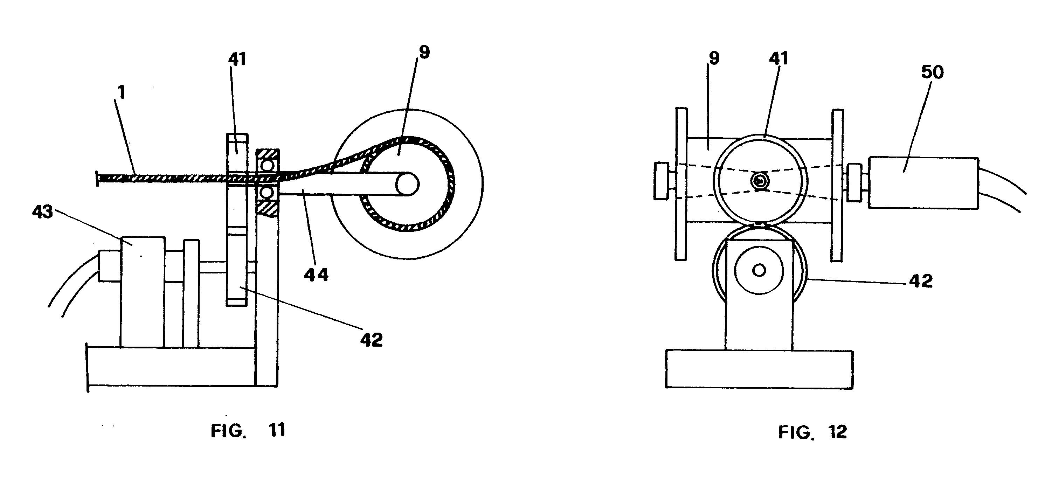

Ensuite et toujours sous l'action de la poussée du dispositif de pinçage 5 de fig. 1, la chaîne pénètre dans un tube de guidage 34 (fig. 9 et 10) prévu au niveau de la pince 7. Les ames 8 en fil de laiton sont extraites de la chaîne 1 à travers des ouvertures latérales 35 et 36. Ces fils 8 sont enroulés sur une bobine d'enroulement 37 après être passés sur des tambours tendeurs 38 et 39. La mise en rotation de la bobine 37 est assurée par un moteur électrique référencé 40 en fig. 10.

Dans le dernier poste de la machine, la chaîne 1 passe à travers l'alésage central d'une roue dentée 41 (fig. 11) qui engrène avec une roue similaire 42 entraînée en rotation par un moteur électrique 43. La chaîne 1 est ainsi mise en rotation avec le support 44 qui soutient la bobine 9, laquelle est elle-même mise en rotation suivant son axe de toute manière appropriée, par exemple par un moteur tel que 50.

Il va de soi qu'on peut se dispenser de la bobine 9 lorsque la chaîne 1 à l'état fini est simplement recueillie dans un récipient approprié, disposé dans la partie inférieure de la machine.

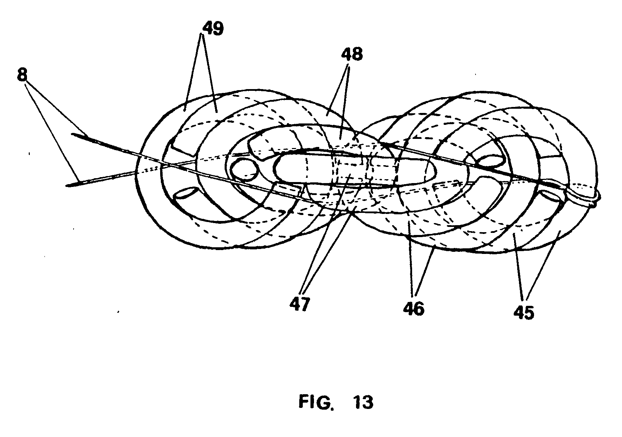

Afin de mieux fixer les idées on a représenté en fig. 13 une longueur d'une chaîne du type à deux brins et l'on peut noter la présence des âmes en laiton 8 ainsi que les soudures effectuées au niveau de chaque paire de spires adjacentes 45, 46, 47, 48 et 49.

On comprend sans peine les avantages présentés par la machine suivant l'invention. Celle-ci permet de réaliser, de manière automatique et suivant un programme précis, les opérations pour la soudure des anneaux ou mailles qui constituent les deux brins élémentaires d'une chaîne ornementale en forme de corde ; les interventions manuelles sont limitées au chargement des bobines qui portent la chaîne à travailler et au déchargement des bobines destinées à l'envidage de la chaîne à l'état fini.

On notera au surplus que la machine est aisément adaptable aux différents types de chaîne présentant des diamètres différents pour les deux brins et des pas également différents pour les spirales, et ce moyennant des manoeuvres très simples, facilement programmables.

**Revendications**

1. Machine pour réaliser les soudures simultanées sur deux mailles, respectivement droite et gauche d'une chaîne ornementale (1) à anneaux croisés du type en forme de corde à deux brins, du genre comprenant une bobine (2) de laquelle est déroulée la chaîne (1) à travailler, des moyens pour avancer la chaîne (1) ainsi qu'un poste d'assemblage (6) comprenant deux organes de soudage (22,23) traversés par ladite chaîne et des moyens (9) pour recueillir cette chaîne à l'état fini, caractérisée en ce que le poste de soudage (6) comprend en outre deux mâchoires mobiles (20, 21) propres à maintenir la chaîne (1) à travailler qui traverse l'ouverture longitudinale d'un support (60) interrompu en deux points au niveau desquels est effectuée la soudure des anneaux de la chaîne à l'aide d'organes de soudage (22, 23) associés à des apports de matière de soudage (22, 23) et à des outils de centrage (24-25) qui mettent en place les anneaux des deux brins de ladite chaîne, tandis que des guides coulissants (32 et 33) permettent les déplacements transversaux des organes (22, 23) précités afin d'assurer leur éloignement de la chaîne lorsqu'ils ne sont pas utilisés pour la soudure.

2. Machine suivant la revendication 1, caractérisée en ce qu'elle comprend en sortie de bobine (2) deux tambours opposés (3, 4) propres à mettre en place par compression les brins de la chaîne en cours de travail avant que ces brins soient amenés au poste de soudure (6).

3. Machine suivant la revendication 2, caractérisée en ce qu'elle comprend à l'avant du poste de soudage (6) un dispositif de pinçage mobile en translation et en rotation qui assure l'avancement et la mise en rotation simultanée de la chaîne en cours de travail, et ce sous l'action d'un levier (14) qui repousse un piston creux (13) traversé axialement par la chaîne, tandis qu'un mécanisme à crémaillère (15) et à roue dentée (16) opère la rotation d'un bâti tubulaire (17) et de la pince (5) que celui-ci supporte.

4. Machine suivant la revendication 3, caractérisée en ce qu'elle comprend après le poste de soudage (6) un tube de guidage (34) découpé d'ouvertures latérales (35, 36) lequel tube est traversé axialement par la chaîne (1) une fois que la soudure a été effectuée, tandis que les âmes en fil métallique (8) sont extraites des brins de cette chaîne à travers les ouvertures précitées pour être recueillies sur une bobine (37) appropriée, la chaîne (1), désormais soudée et privée de ses âmes métalliques, sortant du dernier poste de la machine pour être convenablement recueillie.

**Claims**

1. Machine for soldering two links simultaneously, to left and right, of an ornamental chain (1) of twisted rings of the double stranded type, comprising a bobbin (2) from which the chain (1) to be worked upon is uncoiled, a means of advancing the chain (1) and an assembly station (6) comprising two soldering devices (22, 23) through which the chain passes, and a means (9) of collecting the chain in the finished state, characterised by the fact that the soldering station (6) also comprises two moving jaws (20, 21) able to hold the chain (1) to be worked upon which passes through the longitudinal opening of a support (60), interrupted at two points where the soldering of the rings of the chain is carried out by means of soldering devices (22, 23) combined with supplies of solder (22, 23) and centring tools (24, 25) which hold the rings of the two strands of the chain in place, while sliding guides (32, 33) enable transverse movement of the aforesaid devices (22, 23) so that they can be moved some distance away from the chain when they are not being used for soldering.

2. Machine according to claim 1, characterised by the fact that it has two opposing drums (3, 4) at the output of the bobbin (2), able to hold in place the strands of the chain being worked upon, compressing the strands before they are brought to the soldering station (6).

3. Machine according to claim 2, characterised by the fact that, before the soldering station (6), it has a gripping device capable of translational and rotational movement which simultaneously advances and rotates the chain being worked upon, through the action of a lever (14) which drives a hollow piston (13) through whose axis the chain passes, whilst a rack (15) and pinion (16) mechanism rotates a tubular holder (17) and the gripper (5) which this supports.

4. Machine according to claim 3, characterised by the fact that, after the soldering station (6), it has a guiding tube (34) with lateral openings (35, 36) cut into it, the chain (1) passing through the tube after soldering has been carried out, whilst the metal wire cores (8) are extracted from the strands of the chain through the aforesaid openings and wound on to a suitable bobbin (37), whilst the chain (1), now soldered and with its metal cores removed, exits from the last station of the machine to be collected in a suitable manner.

**Patentansprüche**

1. Maschine zum gleichzeitigen Schweißen zweier Ringe, nämlich eines rechten und eines linken Ringes einer Zierkette (1) mit gekreuzten Ringen des Typs mit zwei Strangstücken, mit einer Spule (2), von welcher die zu bearbeitende Zierkette (1) abwickelbar ist, mit Vorschubmitteln für die Zierkette (1) sowie mit einer Montagestation (6) mit zwei Schweißvorrichtungen (22, 23), durch welche die Zierkette (1) hindurchgeführt wird und mit Mitteln zur Aufnahme der Zierkette (1) in ihrem Endzustand, dadurch gekennzeichnet, daß die Montagestation (6) darüber hinaus zwei bewegliche Klemmbacken (20, 21) aufweist, welche die zu bearbeitende Zierkette (1) halten, die einen Träger (60) durchsetzt, der an zwei Stellen in einer Ebene unterbrochen ist, in welcher das Schweißen der Ringe der Zierkette (1) mit Hilfe der Schweißvorrichtungen (22, 23) erfolgt, welche Vorrichtungen für die Zufuhr des Schweißmittels sowie Zentriervorrichtungen (24, 25) zugeordnet sind, welch letztere die Ringe der beiden Strangstücke der Zierkette (1) in der Bearbeitungsstellung halten und daß zur Verschiebung der Schweißvorrichtungen (22, 23) Gleitführungen (32, 33) vorgesehen sind, welche die Schweißvorrichtungen (22, 23) nach Beendigung des Schweißvorganges von der Zierkette (1) entfernen.

2. Maschine nach Anspruch 1, dadurch gekennzeichnet, daß die Maschine am Ausgangsende der Spule (2) zwei Trommeln (3, 4) aufweist, welche durch Druckanwendung die Strangstücke der Zierkette (1) im Verlaufe des Bearbeitungsvorganges örtlich festlegen, bevor sie in die Montagestation (6) geführt werden.

3. Maschine nach Anspruch 2, dadurch gekennzeichnet, daß die Maschine vor der Montagestation (6) eine Translations- und Rotationsbewegungen vollführende Zange (5) aufweist, welche eine Vorschubbewegung und gleichzeitige Rotationsbewegung der Zierkette (1) im Verlaufe des Bearbeitungsvorganges sicherstellt, daß ein unter der Einwirkung eines Hebels (14) stehender, von der Zierkette (1) in axialer Richtung durchsetzter Hohlkolben (13) vorgesehen ist und daß ein aus einer Zahnstange (15) und einem Zahnrad (16) bestehender Zahnstangentrieb angeordnet ist, der eine Drehbewegung eines rohrförmigen Tragelementes (17) der Zahnstange (5) bewirkt.

4. Maschine nach Anspruch 1, dadurch gekennzeichnet, daß die Maschine hinter der Montagestation (6) ein Führungsrohr (34) mit seitlichen Öffnungen (35, 36) aufweist, durch welches nach Beendigung des Schweißvorganges die Zierkette (1) in axialer Richtung hindurchgeführt wird, während die aus Metalldraht (8) bestehenden Adern durch die seitlichen Öffnungen (35, 36) aus den Strangstücken herausgezogen und auf einer Spule (37) aufgewickelt werden und daß die nunmehr geschweißte und von diesen Metalladern befreite Zierkette (1) die letzte Bearbeitungsstation der Maschine verläßt und in geeigneter Weise aufgenommen wird.

FIG. 1

FIG. 3

FIG. 2

FIG. 4

FIG. 5

FIG. 6

FIG. 7

FIG. 8

EP 0 233 351 B1

FIG. 10

FIG. 9

FIG. 12

FIG. 11

FIG. 13

EP 0 233 351 B1